# EUROPÄISCHE PATENTANMELDUNG

(11) **EP 4 795 911 A1**
(43) Veröffentlichungstag der Anmeldung: **26.08.2026**
(21) Anmeldenummer: 26152239.5
(22) Anmeldetag: 16.01.2026
(51) Int. Cl.: A01B 69/00, A01B 69/04, A01B 76/00, A01B 79/00

(54) **ASSISTENZSYSTEM ZUR GENERIERUNG VON VIRTUELLEN FELDGRENZEN FÜR EIN ZU BEARBEITENDES LANDWIRTSCHAFTLICHES TERRITORIUM**

(30) Priorität: 17.02.2025 DE 102025105851
(71) Anmelder: CLAAS Tractor S.A.S., 78141 Vélizy-Villacoublay Cedex (FR)
(72) Erfinder: Niggemeyer, Tobias, 33098 Paderborn (DE); Monkenbusch, Robin, 33378 Rheda-Wiedenbrück (DE); Rusterholtz, Thiebaud, 91470 LIMOURS (FR)
(74) Vertreter: CLAAS Gruppe

(57) **Zusammenfassung**

Die vorliegende Erfindung betrifft ein Assistenzsystem (1) zur Generierung von virtuellen Feldgrenzen (3) für ein zu bearbeitendes landwirtschaftliches Territorium (2), welches dazu eingerichtet ist, basierend auf elektronischem Datenaustausch für zumindest eine autonome landwirtschaftliche Arbeitsmaschine (8, 9) einen Geofence-Datensatz (14) bereitzustellen, welcher zumindest Feldgrenz-Daten bezüglich der virtuellen Feldgrenzen (3) des Territoriums (2) umfasst, wobei das Assistenzsystem (1) dazu ausgebildet und/oder programmiert ist, die Feldgrenz-Daten in Abhängigkeit von der durch die zumindest eine autonome Arbeitsmaschine (8, 9) auszuführenden landwirtschaftlichen Arbeitsaufgabe anzupassen, wobei die Anpassung zumindest das Generieren von durch die zumindest eine autonome Arbeitsmaschine (8, 9) einzuhaltenden Sicherheitsabständen (21) zu den virtuellen Feldgrenzen (3) umfasst.

## Beschreibung

Die vorliegende Erfindung betrifft ein Assistenzsystem zur Generierung von virtuellen Feldgrenzen für ein zu bearbeitendes landwirtschaftliches Territorium gemäß dem Oberbegriff des Anspruches 1. Weiterhin ist ein Verfahren zur Generierung von virtuellen Feldgrenzen für ein zu bearbeitendes Territorium durch ein auf elektronischem Datenaustausch basierenden Assistenzsystem gemäß dem Oberbegriff des Anspruches 12 Gegenstand der vorliegenden Erfindung.

Virtuelle Feldgrenzen werden generiert, um die sichere Bearbeitung eines landwirtschaftlichen Territoriums durch eine oder mehrere autonome, d.h. unbemannte, landwirtschaftliche Arbeitsmaschinen zu gewährleisten. Die virtuellen Feldgrenzen geben die Grenzen vor, innerhalb deren sich die zumindest eine autonome landwirtschaftliche Arbeitsmaschine während der Ausführung von Arbeitsschritten ausschließlich bewegen dürfen.

Ein Assistenzsystem der eingangs genannten Art ist aus der DE 10 2022 110 128 A1 bekannt. Das Assistenzsystem ist dazu ausgebildet, für eine oder mehrere autonome landwirtschaftliche Arbeitsmaschinen einen Geofence-Datensatz bereitzustellen und die Anwendung des Geofence-Datensatzes durch die eine Arbeitsmachine oder die mehreren autonomen landwirtschaftlichen Arbeitsmaschinen zu überwachen. Der Geofence-Datensatz umfasst eine virtuelle Feldgrenze, Feldgrenzdaten, welche den Verlauf der virtuellen Feldgrenze bestimmen, sowie einen Routenplan mit Fahrtrouten, die vom Assistenzsystem an die zumindest eine autonome landwirtschaftliche Arbeitsmaschine übermittelt werden, die von dieser innerhalb des durch die virtuellen Feldgrenzen begrenzten landwirtschaftlichen Territoriums abgefahren werden sollen.

Landwirtschaftliche Territorien sind nicht nur durch weitere angrenzende landwirtschaftliche Territorien begrenzt, sondern auch durch Wege, Straßen, Wald, Gräben und dergleichen mehr. In diesen angrenzenden, landwirtschaftlich ungenutzten Bereichen können sich beispielsweise Personen, Tiere oder Fahrzeuge aufhalten. Der Einsatz von autonomen landwirtschaftlichen Arbeitsmaschinen und daran adaptierten Anbaugeräten kann daher eine Gefahrenquelle für die sich an der Peripherie der virtuellen Feldgrenzen befindliche Personen, Tiere oder Fahrzeuge bilden.

Ausgehend vom vorstehend genannten Stand der Technik liegt der Erfindung die Aufgabe zugrunde, ein Assistenzsystem der eingangs genannten Art weiterzubilden, durch welches die Sicherheit des Einsatzes einer autonomen landwirtschaftlichen Arbeitsmaschine erhöht wird, insbesondere eine mögliche Gefährdung der Umgebung minimiert wird.

Diese Aufgabe wird durch ein Assistenzsystem zur Generierung von virtuellen Feldgrenzen für ein zu bearbeitendes landwirtschaftliches Territorium mit den Merkmalen des Anspruches 1 gelöst. Weiterhin wird die Aufgabe durch ein Verfahren zur Generierung von virtuellen Feldgrenzen für ein zu bearbeitendes Territorium mit den Merkmalen des Anspruches 12 gelöst. Vorteilhafte Weiterbildungen sind Gegenstand der Unteransprüche.

Gemäß dem Anspruch 1 wird ein Assistenzsystem zur Generierung von virtuellen Feldgrenzen für ein zu bearbeitendes landwirtschaftliches Territorium vorgeschlagen, wobei das Assistenzsystem dazu eingerichtet ist, basierend auf elektronischem Datenaustausch für zumindest eine autonome landwirtschaftliche Arbeitsmaschine einen Geofence-Datensatz bereitzustellen, welcher zumindest Feldgrenz-Daten bezüglich der virtuellen Feldgrenzen des Territoriums umfasst. Erfindungsgemäß ist vorgesehen, dass das Assistenzsystem dazu ausgebildet und/oder programmiert ist, die Feldgrenz-Daten in Abhängigkeit von der durch die zumindest eine autonome Arbeitsmaschine auszuführenden landwirtschaftlichen Arbeitsaufgabe anzupassen, wobei die Anpassung zumindest das Generieren von durch die zumindest eine autonome Arbeitsmaschine einzuhaltenden Sicherheitsabständen zu den virtuellen Feldgrenzen umfasst.

Dem liegt die Überlegung zugrunde, dass die Durchführung von landwirtschaftlichen Arbeitsaufgaben durch die zumindest eine autonome Arbeitsmaschine die Verwendung von für die jeweilige spezifische landwirtschaftliche Arbeitsaufgabe ausgebildeten Anbaugeräten erfordert. Die für die jeweilige spezifische landwirtschaftliche Arbeitsaufgabe ausgebildeten Anbaugeräte weisen aufgrund ihrer Arbeits- und Betriebsweise unterschiedliche Gefährdungspotentiale für die Umgebung auf. Durch das Generieren von durch die zumindest eine autonome Arbeitsmaschine einzuhaltenden Sicherheitsabständen zu den virtuellen Feldgrenzen in Abhängigkeit von der durch die zumindest eine autonome Arbeitsmaschine auszuführenden landwirtschaftlichen Arbeitsaufgabe wird den unterschiedlichen Gefährdungspotentialen für die Umgebung Rechnung getragen.

Insbesondere kann das Assistenzsystem dazu ausgebildet und/oder programmiert sein, die Anpassung von durch die zumindest eine autonome Arbeitsmaschine einzuhaltenden Sicherheitsabständen zu den virtuellen Feldgrenzen unter Berücksichtigung der Charakteristik eines an eine der virtuellen Feldgrenzen angrenzenden räumlichen Umfeldes durchzuführen.

Die Charakteristik eines an eine der virtuellen Feldgrenzen angrenzenden räumlichen Umfeldes umfasst, insbesondere unmittelbar, angrenzende nicht-landwirtschaftlich genutzte Flächen, Wege, Straßen, Zufahrten, Baumbestände, Gewässer, Gräben und dergleichen mehr, auf denen sich Personen, Tiere und/oder Fahrzeuge aufhalten können ebenso wie die Durchführung der landwirtschaftlichen Arbeitsaufgabe durch die zumindest eine autonome Arbeitsmaschine störende oder verhindernde Einflüsse. Die Charakteristik eines an eine der virtuellen Feldgrenzen angrenzenden räumlichen Umfeldes bestimmt somit das Gefährdungspotential von Objekten im an eine der virtuellen Feldgrenzen angrenzenden räumlichen Umfeld durch die zumindest eine autonome Arbeitsmaschine sowie den Einfluss und/oder das Verhindern der Durchführung der landwirtschaftlichen Arbeitsaufgabe durch die zumindest eine autonome Arbeitsmaschine. Ein weiterer Aspekt kann die Vermeidung von Beschädigungen der zumindest einen autonomen Arbeitsmaschine und/oder des daran adaptieren Anbaugerätes durch die Anpassung der Feldgrenz-Daten in Abhängigkeit von der durch die zumindest eine autonome Arbeitsmaschine auszuführenden landwirtschaftlichen Arbeitsaufgabe sein.

Bevorzugt kann das Assistenzsystem dazu ausgebildet und/oder programmiert sein, in Abhängigkeit von der Charakteristik des Umfelds an den virtuellen Feldgrenzen zumindest einen Arbeitsparameter der zumindest einen autonomen Arbeitsmaschine anzupassen. Beispielhaft hierfür sei ein Pflug als Anbaugerät genannt, welcher beim Erreichen eines Randes der zu bearbeitenden Fläche des Territoriums ausgehoben werden muss, um das Vorgewende zu durchfahren. Befindet sich an einem Abschnitt einer der virtuellen Feldgrenzen ein Baumbestand, ist der zu der virtuellen Feldgrenze einzuhaltende Sicherheitsabstand größer zu wählen als im Fall eines Grabens, welcher es erlaubt, die virtuelle Feldgrenze mit dem ausgehobenen Pflug als Anbaugerät zu überschreiten. Hingegen muss bei einer als Spritze ausgeführtem Anbaugerät der durch die zumindest eine autonome Arbeitsmaschine einzuhaltende Sicherheitsabstand zum Graben, zu benachbarten Feldern oder anderen an die virtuellen Feldgrenzen angrenzenden Bereichen stets gewährleistet sein.

Dies gilt auch bei einer Überführung eines Anbaugerätes von einer Transportstellung in eine Arbeitsposition, in welcher die Arbeitsbreite des Anbaugerätes die Breite der autonomen Arbeitsmaschine zur Durchführung der landwirtschaftlichen Arbeitsaufgabe überschreitet. Auch hier ist der durch die zumindest eine autonome Arbeitsmaschine einzuhaltende Sicherheitsabstand zu den virtuellen Feldgrenzen durch die von der zumindest einen autonomen Arbeitsmaschine auszuführenden landwirtschaftlichen Arbeitsaufgabe respektive des hierfür erforderlichen Anbaugerätes abhängig. Somit kann auch bei dieser Konstellation vermieden werden, dass das Anbaugerät in der Transportstellung den Sicherheitsabstand zu den virtuellen Feldgrenzen zwar einhält, jedoch beim Überführen in die Arbeitsposition eine der virtuellen Feldgrenzen überschreitet.

Insbesondere kann das Assistenzsystem dazu ausgebildet und/oder programmiert sein, als zumindest einen Arbeitsparameter die Fahrgeschwindigkeit beim Abfahren der virtuellen Feldgrenzen anzupassen. Beispielsweise kann die Fahrgeschwindigkeit beim Abfahren einer der virtuellen Feldgrenzen reduziert werden, wenn ein Weg an diese angrenzt.

Gemäß einer Weiterbildung kann das Assistenzsystem dazu ausgebildet und/oder programmiert sein, Daten zur Charakteristik des räumlichen Umfelds aus Referenzdaten für das Territorium zu bestimmen, die in einer Datenbank und/oder in einer von der Datenbank unabhängigen Referenzdatenbank hinterlegt sind. Das Assistenzsystem kann hierzu eine Verarbeitungseinrichtung aufweisen, die mit der Datenbank und/oder mit der Referenzdatenbank kommunizierend verbunden ist. Die Verarbeitungseinrichtung kann kommunizierend mit der einen oder den mehreren autonomen landwirtschaftlichen Arbeitsmaschinen verbunden sein, um den Geofence-Datensatz bereitzustellen und die eine oder die mehreren autonomen landwirtschaftlichen Arbeitsmaschinen zu überwachen.

Bevorzugt kann das Assistenzsystem dazu ausgebildet und/oder programmiert sein, als Bilddaten in der Datenbank und/oder der Referenzdatenbank hinterlegte Referenzdaten mittels eines Maschinenlernsystems zur Detektion des räumlichen Umfeldes zu analysieren. Die Bilddaten können beispielsweise von einem Sensorsystem einer bemannten oder unbemannten Arbeitsmaschine, die das Territorium vorangehend bearbeitet hat, bereitgestellt werden. Alternativ oder zusätzlich können die Bilddaten von einer arbeitsmaschinenfernen Sensorik, beispielsweise einer an einer Drohne angebrachten Sensorik, im Vorfeld erfasst werden oder erfasst worden sein. Eine weitere Quelle für Bilddaten können Satellitenaufnahmen bilden, die aus einer entfernten unabhängigen Referenzdatenbank abrufbar sind.

Insbesondere kann das Assistenzsystem dazu ausgebildet und/oder programmiert sein, eingemessene und/oder vermessene Feldgrenzen, die in zumindest einer Datenquelle hinterlegt oder hinterlegbar sind, zu übernehmen.

Insbesondere kann das Assistenzsystem dazu ausgebildet und/oder programmiert sein, vor der Anpassung der Feldgrenz-Daten in Abhängigkeit von der durch die zumindest eine autonome Arbeitsmaschine auszuführenden landwirtschaftlichen Arbeitsaufgabe die von dem Assistenzsystem übernommenen Feldgrenzen zur Bereitstellung einer Freigabeprozedur zu unterziehen. So sollen die Feldgrenz-Daten abgeschlossene virtuelle Feldgrenzen aufweisen, die eine Fläche des landwirtschaftlichen Territoriums vollständig begrenzen. Die Freigabeprozedur kann manuell durch einen Bediener des Assistenzsystems mittels einer Benutzerschnittstelle durchgeführt werden. Mittels der Benutzerschnittstelle können dem Bediener die auf Basis der übernommenen Feldgrenzen bestimmten virtuellen Feldgrenzen grafisch dargestellt werden. Des Weiteren kann der Bediener die virtuellen Feldgrenzen mittels der Benutzerschnittstelle bestätigen oder korrigieren.

Bevorzugt kann das Assistenzsystem dazu ausgebildet und/oder programmiert sein, die von dem Assistenzsystem übernommenen Feldgrenzen automatisch freizugeben, wenn die übernommenen Feldgrenzen auf visuellen Aufzeichnungen einer bemannten Arbeitsmaschine basieren.

Gemäß einer bevorzugten Weiterbildung kann jede virtuelle Feldgrenze individuell parametrierbar sein. Insbesondere kann hierzu der Bediener des Assistenzsystems mittels der Benutzerschnittstelle die den Verlauf der jeweiligen virtuellen Feldgrenzen bestimmenden Parameter eines jeden Abschnittes der virtuellen Feldgrenze individuell anpassen. Hierzu kann der Bediener ihm bekannte Daten zur Charakteristik des räumlichen Umfelds vorgeben und/oder Verläufe zumindest einer der virtuellen Feldgrenzen abschnittsweise modifizieren. Eine abschnittsweise Modifikation der Verläufe der virtuellen Feldgrenzen kann beispielsweise eine Anpassung von Winkeln und/oder Radien umfassen.

Weiter bevorzugt kann das Assistenzsystem dazu ausgebildet und/oder programmiert sein, den durch die zumindest eine autonome Arbeitsmaschine einzuhaltenden Sicherheitsabstand in Abhängigkeit vom Vorhandensein statisch und/oder dynamisch arbeitender Arbeitsorgane an zumindest einem an die Arbeitsmaschine adaptierten Anbaugerät zu variieren. Die Abhängigkeit vom Vorhandensein statisch und/oder dynamisch arbeitender Arbeitsorgane ermöglicht eine differenziertere Bestimmung des einzuhaltenden Sicherheitsabstandes.

Als Beispiel für ein statische Arbeitsorgane aufweisendes Anbaugerät kann wieder der Pflug genannt werden, welcher über keine aktiv angetriebenen Komponenten zur Durchführung der landwirtschaftlichen Arbeitsaufgabe, das Pflügen, verfügt, so dass sich der Einfluss auf die Umgebung auf den unmittelbaren Arbeitsbereich beschränkt. Vergleichbares gilt für Sämaschinen, die keine über ihren unmittelbaren Arbeitsbereich hinausgehend die Umgebung beeinflussende Arbeitsaggregate umfassen. Der unmittelbare Arbeitsbereich ist durch die Erstreckung des zumindest einen Anbaugerätes in Querrichtung und Längsrichtung bestimmt. Somit ermöglich ein an die zumindest eine autonome Arbeitsmaschine adaptiertes Anbaugerät mit statischen Arbeitsorganen eine Annäherung bis unmittelbar an die virtuellen Feldgrenzen. Dabei wird die mögliche Annäherung durch die Arbeitsbreite und Position des Anbaugerätes bestimmt. So ragt beispielsweise der Pflug als Anbaugerät nur zu einer Seite hin seitlich über die Breite der autonomen Arbeitsmaschine hinaus. Eine Sämaschine als Anbaugerät ragt hingegen beidseitig über die Breite der autonomen Arbeitsmaschine hinaus.

Ein dynamische Arbeitsorgane aufweisendes Anbaugerät ist beispielsweise ein Schwader oder ein Mähwerk. Die Arbeitsorgane des Schwaders sind rotierende Rechkreisel mit daran angeordneten Zinkenträgen und Zinken. Die dynamischen Arbeitsorgane des Mähwerks sind rotierende Mähscheiben mit daran angeordneten Messern. Die rotierend angetriebenen Arbeitsorgane können Fremdkörper wie Steine aus dem unmittelbaren Arbeitsbereich des Anbaugerätes hinausbefördern, so dass diese für lebende Objekte zur Gefahr werden können, die sich seitlich von oder hinter dem Anbaugerät aufhalten. Entsprechend wird der durch die zumindest eine autonome Arbeitsmaschine einzuhaltende Sicherheitsabstand zu den virtuellen Feldgrenzen größer gewählt als beispielsweise beim Pflug, um dieser Gefahr zu begegnen.

Bei einer vorteilhaften Weiterbildung der erfindungsgemäßen Lösung ist vorgesehen, dass das Assistenzsystem zur Überwachung der Anwendung des Geofence-Datensatzes durch die eine oder die mehreren autonomen landwirtschaftlichen Arbeitsmaschinen dazu ausgebildet und/oder programmiert ist, basierend auf einer ermittelten Position der einen oder der mehreren autonomen landwirtschaftlichen Arbeitsmaschinen bezüglich der virtuellen Feldgrenzen die eine oder die mehreren autonomen landwirtschaftlichen Arbeitsmaschinen derart anzusteuern, dass eine Unterschreitung des Sicherheitsabstandes zu der virtuellen Feldgrenze durch eine oder mehrere autonome landwirtschaftliche Arbeitsmaschinen entgegengewirkt wird.

Nach einer weiteren Lehre gemäß Anspruch 12, der eigenständige Bedeutung zukommt, wird ein Verfahren zur Generierung von virtuellen Feldgrenzen für ein zu bearbeitendes landwirtschaftliches Territorium durch ein auf elektronischem Datenaustausch basierenden Assistenzsystem vorgeschlagen, durch welches für zumindest eine autonome landwirtschaftliche Arbeitsmaschine ein Geofence-Datensatz bereitgestellt wird, welcher zumindest Feldgrenz-Daten bezüglich der virtuellen Feldgrenzen des Territoriums umfasst, wobei die Feldgrenz-Daten in Abhängigkeit von der durch die zumindest eine autonome Arbeitsmaschine auszuführenden landwirtschaftlichen Arbeitsaufgabe durch das Assistenzsystem angepasst werden, wobei die Anpassung zumindest das Generieren von durch die zumindest eine autonome Arbeitsmaschine einzuhaltenden Sicherheitsabständen zu den virtuellen Feldgrenzen umfasst. Auf alle Ausführungen zu dem erfindungsgemäßen Assistenzsystem, die geeignet sind, das Verfahren insgesamt zu erläutern, darf verwiesen werden.

Bevorzugt kann die Anpassung von durch die zumindest eine autonome Arbeitsmaschine einzuhaltenden Sicherheitsabständen zu einer der virtuellen Feldgrenzen unter Berücksichtigung der Charakteristik eines an die eine der virtuellen Feldgrenzen angrenzenden räumlichen Umfeldes durchgeführt werden.

Insbesondere kann beim Ausführen von Arbeitssequenzen durch die zumindest einen autonomen Arbeitsmaschine der einzuhaltende Sicherheitsabstand in Abhängigkeit von der auszuführenden landwirtschaftlichen Arbeitsaufgabe und unter Berücksichtigung der Charakteristik des räumlichen Umfeldes bestimmt werden. Eine auszuführende Arbeitssequenz kann das Ausheben des als Pflug ausgeführten Anbaugerätes ein.

Weiter bevorzugt können die Feldgrenz-Daten in Abhängigkeit von dem an die zumindest eine autonome Arbeitsmaschine adaptierten, zur Ausführung der landwirtschaftlichen Arbeitsaufgabe eingerichteten Anbaugerät durch das Assistenzsystem angepasst werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein Assistenzsystem zur Generierung von virtuellen Feldgrenzen für ein zu bearbeitendes Territorium;
- Fig. 2: schematisch und exemplarisch eine durch eine Benutzerschnittstelle des Assistenzsystems gezeigte Visualisierung von einzuhaltenden Sicherheitsabständen beim Pflügen als durchzuführende landwirtschaftliche Arbeitsaufgabe; und
- Fig. 3: schematisch und exemplarisch eine durch eine Benutzerschnittstelle des Assistenzsystems gezeigte Visualisierung von einzuhaltenden Sicherheitsabständen beim Mähen als durchzuführende landwirtschaftliche Arbeitsaufgabe.

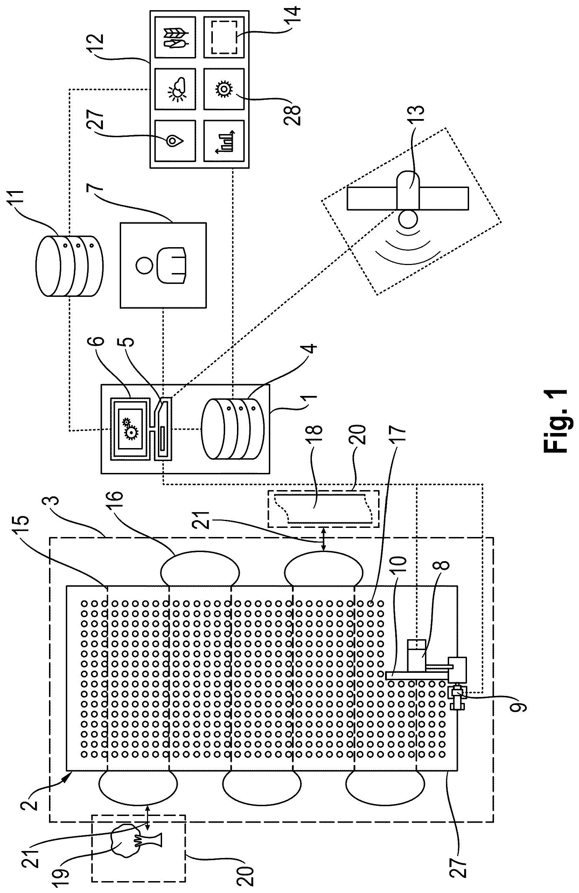

In Fig. 1 ist schematisch und exemplarisch ein Assistenzsystem 1 zur Generierung von virtuellen Feldgrenzen 3 für ein zu bearbeitendes landwirtschaftliches Territorium 2 dargestellt. Das Assistenzsystem 1 umfasst eine Datenbank 4, eine Recheneinheit 5 sowie eine Benutzerschnittstelle 6. Ein Bediener 7 des Assistenzsystems 1 kann mittels der Benutzerschnittstelle 6 mit dem Assistenzsystem 1 interagieren.

Die Benutzerschnittstelle 6 kann dazu eingerichtet sein, verschiedene von der Recheneinheit 5 erzeugte oder an diese übermittelte grafische Darstellungen dem Bediener 7 des Assistenzsystems 1, beispielsweise einem Landwirt, anzuzeigen. Hierzu gehören Darstellungen einer oder mehrerer autonomer landwirtschaftlicher Arbeitsmaschinen 8, 9, ein oder mehrere daran adaptierbare Anbaugeräte 10 und/oder das zumindest eine zu bearbeitende landwirtschaftliche Territorium 2, auf denen eine landwirtschaftliche Arbeitsaufgabe mit mindestens einem Arbeitsschritt oder einer Abfolge von Arbeitsschritten durchgeführt werden soll.

Das Assistenzsystem 1 kann weiterhin mit einer Referenzdatenbank 11 zur Übertragung von Daten verbunden sein, in der Referenzdaten 12 hinterlegt sein können, auf die das Assistenzsystem 1 zugreifen kann. Das Assistenzsystem 1 weist eine Positionsbestimmungseinrichtung 13 zur Positionsbestimmung der einen oder der mehreren autonomen landwirtschaftlichen Arbeitsmaschinen 8, 9 bezüglich der virtuellen Feldgrenzen 3 auf. Die Positionsbestimmungseinrichtung 13 kann zur Positionsbestimmung mittels Satellitennavigationssignalen ausgebildet und/oder programmiert sein, wobei wenigstens eine Satellitenvorrichtung zur Positionsbestimmung der einen oder der mehreren autonomen landwirtschaftlichen Arbeitsmaschinen 8, 9 bezüglich der virtuellen Feldgrenzen 3 verwendet werden kann.

Das von der zumindest einen autonomen landwirtschaftlichen Arbeitsmaschine 8, 9 zu bearbeitende Territorium 2 ist, wie eingangs erwähnt, durch die virtuellen Feldgrenzen 3 begrenzt. Das auf elektronischem Datenaustausch basierende Assistenzsystem 1 ist zur Generierung der virtuellen Feldgrenzen 3 des landwirtschaftlichen Territoriums 2 ausgebildet und/oder programmiert. Das Assistenzsystem 1 stellt für die eine oder mehreren autonomen landwirtschaftlichen Arbeitsmaschinen 8, 9 einen Geofence-Datensatz 14 bereit. Das Assistenzsystem 1 überwacht die Anwendung des Geofence-Datensatzes 14 durch die eine oder die mehreren autonomen landwirtschaftlichen Arbeitsmaschinen 8, 9. Der Geofence-Datensatz 14 umfasst Feldgrenz-Daten bezüglich der virtuellen Feldgrenzen 3. Die Feldgrenz-Daten bestimmen unter anderem den Verlauf und die Kontur der virtuellen Feldgrenzen 3.

Das auf elektronischem Datenaustausch basierende Assistenzsystem 1 ist dazu ausgebildet und/oder programmiert, für die eine oder mehrere autonome landwirtschaftliche Arbeitsmaschinen 8, 9 einen Routenplan mit Fahrrouten 15 und/oder 16 entlang des durch die virtuellen Feldgrenzen 3 begrenzten landwirtschaftlichen Territoriums 2 zu generieren. So kann beispielsweise die zumindest eine autonome Arbeitsmaschine 8 als auszuführende landwirtschaftliche Arbeitsaufgabe ein auf diesem Territorium 2 ausgebildetes Erntegut 17 ernten. Die Fahrrouten 15 und/oder 16 des Routenplans berücksichtigen die virtuellen Feldgrenzen 3, so dass einer Überschreitung der virtuellen Feldgrenzen 3 durch die eine oder mehreren autonomen landwirtschaftlichen Arbeitsmaschinen 8, 9 entgegengewirkt wird. Diese Fahrrouten 15 und/oder 16 können abschnittsweise geradlinig und/oder abschnittsweise ungerade, insbesondere gekrümmt, ausgebildet sein. Insbesondere können Fahrrouten 16 als Vorgewende teilweise gekrümmte Fahrroutenabschnitte ausbilden.

Weitere auf dem Territorium 2 auszuführende landwirtschaftliche Arbeitsaufgabe können Vorgänge zur Bodenbearbeitung, zum Säen 25, zum Düngen, zum Mähen 24, und dergleichen mehr sein, welche durch die zumindest eine autonome Arbeitsmaschine 8, 9 und ein daran adaptiertes Anbaugerät 10, welches entsprechend der auszuführenden landwirtschaftlichen Arbeitsaufgabe ausgebildet ist, durchgeführt werden.

Landwirtschaftliche Territorien 2 sind nicht nur durch weitere angrenzende landwirtschaftliche Territorien 26 begrenzt, sondern auch durch Wege 18, Straßen, Wald 19, Gräben 22 und dergleichen mehr, wie in Fig. 1 bespielhaft angedeutet. Zumindest auf diesen an das zu bearbeitende Territorium 2 angrenzenden, landwirtschaftlich ungenutzten Bereichen 20 können sich beispielsweise Personen, Tiere oder Fahrzeuge aufhalten. Der Einsatz von autonomen landwirtschaftlichen Arbeitsmaschinen 8, 9 und den daran adaptierten Anbaugeräten 10 kann eine Gefahrenquelle für die sich an der Peripherie der virtuellen Feldgrenzen 3 befindlichen Personen, Tiere und/oder Fahrzeuge bilden.

Das Assistenzsystem 1 ist dazu ausgebildet und/oder programmiert, die Feldgrenz-Daten in Abhängigkeit von der durch die zumindest eine autonome Arbeitsmaschine 8, 9 auszuführenden landwirtschaftlichen Arbeitsaufgabe anzupassen, wobei die Anpassung zumindest das Generieren von durch die zumindest eine autonome Arbeitsmaschine 8, 9 einzuhaltenden Sicherheitsabständen 21 zur virtuellen Feldgrenze 3 umfasst.

Wie beispielhaft aus Fig. 1 ersichtlich, weist die autonome Arbeitsmaschine 8 ein Schneidwerk als Anbaugerät 10 auf. Der einzuhaltende Sicherheitsabstand 21 zur virtuellen Feldgrenze 3 ist aufgrund der auszuführenden landwirtschaftlichen Arbeitsaufgabe, dem Ernten von Erntegut 17, daher derart zu bestimmen, dass beim Durchfahren des Vorgewendes 16 das zur Durchführung der landwirtschaftlichen Arbeitsaufgabe an die autonome Arbeitsmaschine 8 adaptierte Anbaugerät 10 aufgrund seiner Arbeitsbreite nicht über die virtuelle Feldgrenze 3 hinausragen kann. Die Feldgrenz-Daten sind somit in Abhängigkeit von der durch die zumindest eine autonome Arbeitsmaschine 8, 9 auszuführenden landwirtschaftlichen Arbeitsaufgabe anzupassen.

Eine weitere Situation, in welcher der einzuhaltende Sicherheitsabstand 21 zur virtuellen Feldgrenze 3 aufgrund der auszuführenden landwirtschaftlichen Arbeitsaufgabe zu bestimmen ist, entsteht durch den angrenzenden Wald 19. Beim Durchfahren des Vorgewendes 16 kann der Abstand des Anbaugerätes 10 zu benachbarten Bäumen zu gering sein oder ein Bewuchs am Rand des Waldes 19 respektive der virtuellen Feldgrenze 3 verhindert es, das Vorgewende 16 mit dem ausgehobenen Anbaugerät 10 beschädigungsfrei zu durchfahren. Die vorstehenden Beispiele dienen lediglich der Erläuterung und sind nicht darauf begrenzend zu verstehen.

Dabei ist vorgesehen, dass das Assistenzsystem 1 zur Überwachung der Anwendung des Geofence-Datensatzes 14 durch die eine oder die mehreren autonomen landwirtschaftlichen Arbeitsmaschinen 8, 9 ausgebildet und/oder programmiert ist, um basierend auf einer ermittelten Position der einen oder der mehreren autonomen landwirtschaftlichen Arbeitsmaschinen 8, 9 bezüglich der virtuellen Feldgrenzen 3 die eine oder die mehreren autonomen landwirtschaftlichen Arbeitsmaschinen 8, 9 derart anzusteuern, dass eine Unterschreitung des Sicherheitsabstandes 21 zu den virtuellen Feldgrenzen 3 durch eine oder mehrere autonome landwirtschaftliche Arbeitsmaschinen 8, 9 entgegengewirkt wird.

Die Ansteuerung zur Einhaltung des Sicherheitsabstandes 21 kann in Abhängigkeit von der Charakteristik des Umfelds an der jeweiligen virtuellen Feldgrenze 3 variieren. Dies kann insbesondere dann der Fall sein, wenn ein Unterschreiten des Sicherheitsabstandes 21 zu einer der virtuellen Feldgrenzen 3 aufgrund der Charakteristik des Umfeldes, der auszuführenden Arbeitsaufgabe und der Ausführung des Anbaugerätes 10 erkennbar ohne eine Gefährdung einhergeht, wie weiter unten beispielhaft an der durchzuführenden landwirtschaftliche Arbeitsaufgabe Pflügen 23 erläutert wird.

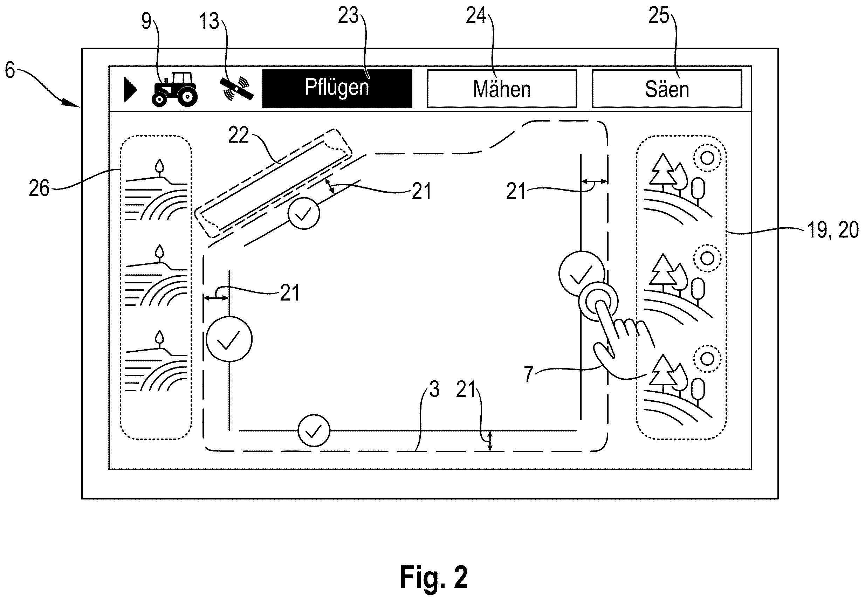

Die Darstellung in Fig. 2 zeigt schematisch und exemplarisch eine durch die Benutzerschnittstelle 6 des Assistenzsystems 1 dem Bediener 7 gezeigte Visualisierung von zur jeweiligen virtuellen Feldgrenze 3 einzuhaltenden Sicherheitsabständen 21 beim Pflügen 23 als durchzuführende landwirtschaftliche Arbeitsaufgabe und deren Freigabe zur Übermittlung des Geofence-Datensatz 14, der die Feldgrenz-Daten und die darin enthaltenen Sicherheitsabstände 21 umfasst. Weitere landwirtschaftliche Arbeitsaufgabe sind beispielsweise das Mähen 24 und das Säen 25.

Wie bereits ausgeführt, haben an die virtuellen Feldgrenzen 3 angrenzende Bereiche 20 und/oder Territorien 26 Einfluss auf den durch das Assistenzsystem 1 zu bestimmenden, einzuhaltenden Sicherheitsabstand 21. So kann das Assistenzsystem 1 dazu ausgebildet und/oder programmiert sein, in Abhängigkeit von der Charakteristik des Umfelds an den jeweiligen virtuellen Feldgrenzen 3 zumindest einen Arbeitsparameter der zumindest einen autonomen Arbeitsmaschine 8, 9 anzupassen.

Die Charakteristik eines an die jeweilige virtuelle Feldgrenze 3 angrenzenden räumlichen Umfeldes respektive Bereiches 20 umfasst, insbesondere unmittelbar, angrenzende nicht-landwirtschaftlich genutzte Flächen, Wege 18, Straßen, Zufahrten, Baumbestände 19, Gewässer, Gräben 22 und dergleichen mehr, auf denen sich Personen, Tiere und/oder Fahrzeuge aufhalten können ebenso wie die Durchführung der landwirtschaftlichen Arbeitsaufgabe durch die zumindest eine autonome Arbeitsmaschine 8, 9 störende oder verhindernde Einflüsse. Die Charakteristik eines an eine der virtuellen Feldgrenzen 3 angrenzenden räumlichen Umfeldes bestimmt somit das Gefährdungspotential von Objekten in dem an die jeweilige virtuelle Feldgrenze 3 angrenzenden räumlichen Umfeld durch die zumindest eine autonome Arbeitsmaschine 8, 9 und/oder des daran adaptieren Anbaugerätes 10. Ebenso bestimmt die Charakteristik eines an eine der virtuellen Feldgrenzen 3 angrenzenden räumlichen Umfeldes den Einfluss und/oder das Verhindern der Durchführung der landwirtschaftlichen Arbeitsaufgabe durch die zumindest eine autonome Arbeitsmaschine 8, 9. Einen weiteren Aspekt bildet die Vermeidung von Beschädigungen der autonomen Arbeitsmaschine 8,9 und/oder des daran adaptieren Anbaugerätes 10 durch die Anpassung der Feldgrenz-Daten in Abhängigkeit von der durch die zumindest eine autonome Arbeitsmaschine 8, 9 auszuführenden landwirtschaftlichen Arbeitsaufgabe.

Bei einem Pflug als Anbaugerät 10 ist dieser beim Erreichen eines Randes der zu bearbeitenden Fläche des Territoriums 2 auszuheben, um das Vorgewende 16 durchfahren zu können. Befindet sich an einem Abschnitt einer der virtuellen Feldgrenzen 3 der Wald 19, ist der zu der virtuellen Feldgrenze 3 einzuhaltende Sicherheitsabstand 21 größer zu wählen als im Fall des Grabens 22, welcher es erlaubt, die virtuelle Feldgrenze 3 mit dem ausgehobenen Pflug als Anbaugerät 10 zu überschreiten. Hingegen muss bei einer als Spritze ausgeführtem Anbaugerät 10 der durch die zumindest eine autonome Arbeitsmaschine 8, 9 einzuhaltende Sicherheitsabstand zum Graben 22, zu benachbarten Feldern 26 oder anderen an eine der virtuellen Feldgrenzen 3 angrenzenden Bereichen 20 stets gewährleistet sein.

Insbesondere kann das Assistenzsystem 1 dazu ausgebildet und/oder programmiert sein, als zumindest einen Arbeitsparameter die Fahrgeschwindigkeit beim Abfahren der virtuellen Feldgrenzen 3 anzupassen. Beispielsweise kann die Fahrgeschwindigkeit beim Abfahren der virtuellen Feldgrenzen 3 automatisch reduziert werden, wenn ein Weg 18 an diese angrenzt.

Das Assistenzsystem 1 ist dazu ausgebildet und/oder programmiert, Daten 27 zur Charakteristik des räumlichen Umfelds aus Referenzdaten 12 für das zu bearbeitende Territorium 2 zu bestimmen, die in der Datenbank 4 und/oder in der von der Datenbank 4 unabhängigen Referenzdatenbank 11 hinterlegt sind. Die in der Datenbank 4 bzw. Referenzdatenbank 11 hinterlegten Daten können darüber hinaus topografische Informationen zu den Bereichen 20 sein, die vom Assistenzsystem 1 abrufbar sind.

Weitere Daten können Betriebsdaten 28 der zumindest einen autonomen Arbeitsmaschine 8, 9 und des jeweils daran adaptierten Anbaugerätes 10 sein, welche für die Anpassung der Feldgrenz-Daten in Abhängigkeit von der durch die zumindest eine autonome Arbeitsmaschine 8, 9 auszuführenden landwirtschaftlichen Arbeitsaufgabe erforderlich sein können.

Bevorzugt kann das Assistenzsystem 1 dazu ausgebildet und/oder programmiert sein, als Bilddaten in der Datenbank 4 und/oder der Referenzdatenbank 11 hinterlegte Referenzdaten 12 mittels eines Maschinenlernsystems zur Detektion des räumlichen Umfeldes zu analysieren. Die Bilddaten können beispielsweise von einem Sensorsystem einer bemannten und/oder unbemannten Arbeitsmaschine, die das Territorium 2 vorangehend bearbeitet hat, bereitgestellt werden. Alternativ oder zusätzlich können die Bilddaten von einer arbeitsmaschinenfernen Sensorik, beispielsweise einer an einer Drohne angebrachten Sensorik, im Vorfeld der Bearbeitung durch die zumindest eine autonomen Arbeitsmaschine 8, 9 erfasst werden oder erfasst worden sein. Eine weitere Quelle für Bilddaten können Satellitenaufnahmen bilden, die aus der entfernten unabhängigen Referenzdatenbank 11 abrufbar sind.

Das Assistenzsystem 1 ist dazu ausgebildet und/oder programmiert, eingemessene und/oder vermessene Feldgrenzen, die in zumindest einer Datenquelle, vorzugsweise in der Datenbank 4 und/oder der Referenzdatenbank 11, hinterlegt oder hinterlegbar sind, zu übernehmen. Dabei kann der Geofence-Datensatz 14 eingemessene und/oder vermessene und/oder zertifizierte Geofence-Daten umfassen.

Insbesondere ist das Assistenzsystem 1 dazu ausgebildet und/oder programmiert, vor der Anpassung der Feldgrenz-Daten in Abhängigkeit von der durch die zumindest eine autonome Arbeitsmaschine 8, 9 auszuführenden landwirtschaftlichen Arbeitsaufgabe die von dem Assistenzsystem 1 übernommenen Feldgrenzen zur Bereitstellung einer Freigabeprozedur zu unterziehen. Dazu kann es dem Bediener 7 obliegen, die durch die Benutzerschnittstelle 6 visualisierten virtuellen Feldgrenzen 3 zu prüfen, ob diese geschlossen sind.

Alternativ oder zusätzlich kann das Assistenzsystem 1 dazu ausgebildet und/oder programmiert sein, die von dem Assistenzsystem 1 übernommenen Feldgrenzen als virtuelle Feldgrenzen 3 automatisch freizugeben, wenn die übernommenen Feldgrenzen auf visuellen Aufzeichnungen einer bemannten Arbeitsmaschine basieren.

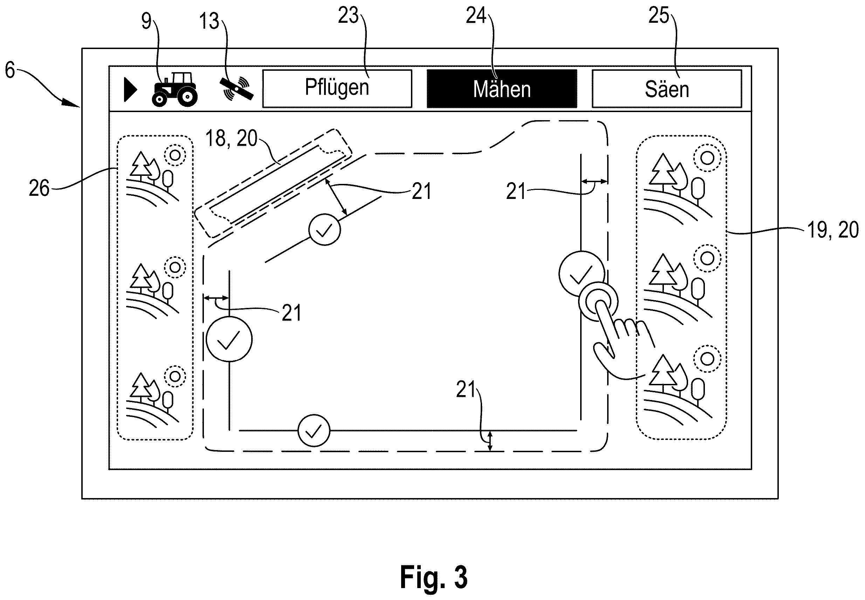

Die Darstellung in Fig. 3 zeigt schematisch und exemplarisch eine durch die Benutzerschnittstelle 6 des Assistenzsystems 1 dem Bediener 7 gezeigte Visualisierung von zur virtuellen Feldgrenze 3 einzuhaltenden Sicherheitsabständen 21 beim Mähen 24 als durchzuführende landwirtschaftliche Arbeitsaufgabe und deren Freigabe zur Übermittlung des Geofence-Datensatz 14, der die Feldgrenz-Daten und die darin enthaltenen Sicherheitsabstände 21 umfasst.

Die zumindest eine autonome Arbeitsmaschine 8 weist als Anbaugerät 10 zumindest ein Mähwerk auf. Auch in diesem Fall kann als zumindest ein Arbeitsparameter die Fahrgeschwindigkeit beim Abfahren der virtuellen Feldgrenzen 3 angepasst werden, insbesondere beim Abfahren der virtuellen Feldgrenzen 3 sollte die Fahrgeschwindigkeit reduziert werden, wenn ein Weg 18 an die eine der virtuellen Feldgrenzen 3 angrenzt.

Das Assistenzsystem 1 ist dazu ausgebildet und/oder programmiert, den durch die zumindest eine autonome Arbeitsmaschine 8, 9 einzuhaltenden Sicherheitsabstand 21 in Abhängigkeit vom Vorhandensein statisch und/oder dynamisch arbeitender Arbeitsorgane an zumindest einem der an die Arbeitsmaschine 8, 9 adaptierten Anbaugeräte 10 zu variieren.

Als Beispiel für ein statische Arbeitsorgane aufweisendes Anbaugerät 10 kann wieder der Pflug genannt werden, welcher über keine aktiv angetriebenen Komponenten zur Durchführung der landwirtschaftlichen Arbeitsaufgabe, das Pflügen 23, verfügt, so dass sich der Einfluss auf die Umgebung auf den unmittelbaren Arbeitsbereich beschränkt. Vergleichbares gilt für Sämaschinen, die keine über ihren unmittelbaren Arbeitsbereich hinausgehend die Umgebung beeinflussende Arbeitsaggregate umfassen. Der unmittelbare Arbeitsbereich ist durch die Erstreckung des zumindest einen Anbaugerätes 10 in Querrichtung und Längsrichtung bestimmt. Somit ermöglich ein an die zumindest eine autonome Arbeitsmaschine 8 adaptiertes Anbaugerät 10 mit statischen Arbeitsorganen eine Annäherung bis unmittelbar an die virtuellen Feldgrenzen 3. Dabei wird die mögliche Annäherung durch die Arbeitsbreite und Position des Anbaugerätes 10 relativ zu der autonomen Arbeitsmaschine 8, 9 bestimmt. So ragt beispielsweise der Pflug als Anbaugerät 10 nur zu einer Seite hin seitlich über die Breite der autonomen Arbeitsmaschine 9 hinaus. Das Schneidwerk oder eine Sämaschine als Anbaugerät 10 ragen hingegen beidseitig über die Breite der autonomen Arbeitsmaschine 8, 9 hinaus.

Ein dynamische Arbeitsorgane aufweisendes Anbaugerät 10 ist beispielsweise ein Schwader oder ein Mähwerk. Die Arbeitsorgane des Schwaders sind rotierende Rechkreisel mit daran angeordneten Zinkenträgen und Zinken. Die dynamischen Arbeitsorgane des Mähwerks sind rotierende Mähscheiben mit daran angeordneten Messern. Die rotierend angetriebenen Arbeitsorgane können Fremdkörper wie Steine aus dem unmittelbaren Arbeitsbereich des Anbaugerätes 10 nach hinten und/oder seitlich hinausbefördern, so dass diese für lebende Objekte zur Gefahr werden können, die sich seitlich von oder hinter dem Anbaugerät 10 aufhalten. Entsprechend wird der durch die zumindest eine autonome Arbeitsmaschine 8 einzuhaltende Sicherheitsabstand 21 zu den virtuellen Feldgrenzen 3 größer gewählt als beispielsweise beim Pflug als Anbaugerät 10, um dieser Gefahr zu begegnen.

Gemäß einer bevorzugten Weiterbildung kann jede der virtuellen Feldgrenzen 3 individuell parametrierbar sein. Insbesondere kann hierzu der Bediener 7 des Assistenzsystems 1 mittels der Benutzerschnittstelle 6 den Verlauf bestimmende Parameter eines jeden Abschnitts der virtuellen Feldgrenzen 3 individuell anpassen. Hierzu kann der Bediener 7 ihm bekannte Daten zur Charakteristik des räumlichen Umfelds vorgeben und/oder Verläufe der virtuellen Feldgrenzen 3 abschnittsweise modifizieren. Eine abschnittsweise Modifikation der Verläufe der virtuellen Feldgrenzen 3 kann beispielsweise eine Anpassung von Winkel und/oder Radien umfassen.

### Bezugszeichenliste

- 1: Assistenzsystem
- 2: Territorium
- 3: Virtuelle Feldgrenze
- 4: Datenbank
- 5: Recheneinheit
- 6: Benutzerschnittstelle
- 7: Bediener
- 8: Autonome Arbeitsmaschine
- 9: Autonome Arbeitsmaschine
- 10: Anbaugerät
- 11: Referenzdatenbank
- 12: Referenzdaten
- 13: Positionsbestimmungseinrichtung
- 14: Geofence-Datensatz
- 15: Fahrtoute
- 16: Fahrtoute/Vorgewende
- 17: Erntegut
- 18: Weg
- 19: Wald
- 20: Bereich
- 21: Sicherheitsabstand
- 22: Graben
- 23: Pflügen
- 24: Mähen
- 25: Säen
- 26: Territorium
- 27: Daten
- 28: Betriebsdaten

## Patentansprüche

1. Assistenzsystem (1) zur Generierung von virtuellen Feldgrenzen (3) für ein zu bearbeitendes landwirtschaftliches Territorium (2), welches dazu eingerichtet ist, basierend auf elektronischem Datenaustausch für zumindest eine autonome landwirtschaftliche Arbeitsmaschine (8, 9) einen Geofence-Datensatz (14) bereitzustellen, welcher zumindest Feldgrenz-Daten bezüglich der virtuellen Feldgrenzen (3) des Territoriums (2) umfasst, **dadurch gekennzeichnet, dass** das Assistenzsystem (1) dazu ausgebildet und/oder programmiert ist, die Feldgrenz-Daten in Abhängigkeit von der durch die zumindest eine autonome Arbeitsmaschine (8, 9) auszuführenden landwirtschaftlichen Arbeitsaufgabe anzupassen, wobei die Anpassung zumindest das Generieren von durch die zumindest eine autonome Arbeitsmaschine (8, 9) einzuhaltenden Sicherheitsabständen (21) zu den virtuellen Feldgrenzen (3) umfasst.

2. Assistenzsystem (1) nach Anspruch 1, **dadurch gekennzeichnet, dass** das Assistenzsystem (1) dazu ausgebildet und/oder programmiert ist, die Anpassung von durch die zumindest eine autonome Arbeitsmaschine (8, 9) einzuhaltenden Sicherheitsabständen (21) zu einer der virtuellen Feldgrenzen (3) unter Berücksichtigung einer Charakteristik eines an die virtuelle Feldgrenze (3) angrenzenden räumlichen Umfeldes durchzuführen.

3. Assistenzsystem (1) nach Anspruch 2, **dadurch gekennzeichnet, dass** das Assistenzsystem (1) dazu ausgebildet und/oder programmiert ist, in Abhängigkeit von der Charakteristik des Umfelds an den virtuellen Feldgrenzen (3) zumindest einen Arbeitsparameter der zumindest einen autonomen Arbeitsmaschine (8, 9) anzupassen.

4. Assistenzsystem (1) nach Anspruch 3, **dadurch gekennzeichnet, dass** das Assistenzsystem (1) dazu ausgebildet und/oder programmiert ist, als zumindest einen Arbeitsparameter die Fahrgeschwindigkeit beim Abfahren der virtuellen Feldgrenzen (3) anzupassen.

5. Assistenzsystem (1) nach einem der Ansprüche 2 bis 4, **dadurch gekennzeichnet, dass** das Assistenzsystem (1) dazu ausgebildet und/oder programmiert ist, Daten zur Charakteristik des räumlichen Umfelds aus Referenzdaten (12) für das Territorium (2) zu bestimmen, die in einer Datenbank (4) und/oder in einer von der Datenbank (4) unabhängigen Referenzdatenbank (11) hinterlegt sind.

6. Assistenzsystem (1) nach Anspruch 5, **dadurch gekennzeichnet, dass** das Assistenzsystem (1) dazu ausgebildet und/oder programmiert ist, als Bilddaten in der Datenbank (4) und/oder der Referenzdatenbank (11) hinterlegte Referenzdaten (12) mittels eines Maschinenlernsystems zur Detektion des räumlichen Umfeldes zu analysieren.

7. Assistenzsystem (1) nach einem der vorangehenden Ansprüche, **dadurch gekennzeichnet, dass** das Assistenzsystem (1) dazu ausgebildet und/oder programmiert ist, eingemessene und/oder vermessene Feldgrenzen, die in zumindest einer Datenquelle hinterlegt oder hinterlegbar sind, zu übernehmen.

8. Assistenzsystem (1) nach Anspruch 7, **dadurch gekennzeichnet, dass** das Assistenzsystem (1) dazu ausgebildet und/oder programmiert ist, vor der Anpassung der Feldgrenz-Daten in Abhängigkeit von der durch die zumindest eine autonome Arbeitsmaschine (8, 9) auszuführenden landwirtschaftlichen Arbeitsaufgabe die von dem Assistenzsystem (1) übernommenen Feldgrenzen zur Bereitstellung einer Freigabeprozedur zu unterziehen.

9. Assistenzsystem (1) nach Anspruch 7 oder 8, **dadurch gekennzeichnet, dass** das Assistenzsystem (1) dazu ausgebildet und/oder programmiert ist, die von dem Assistenzsystem (1) übernommenen Feldgrenzen automatisch freizugeben, wenn die übernommenen Feldgrenzen auf visuellen Aufzeichnungen einer bemannten Arbeitsmaschine basieren.

10. Assistenzsystem (1) nach einem der vorangehenden Ansprüche, **dadurch gekennzeichnet, dass** jede virtuelle Feldgrenze (3) individuell parametrierbar ist.

11. Assistenzsystem (1) nach einem der vorangehenden Ansprüche, **dadurch gekennzeichnet, dass** das Assistenzsystem (1) dazu ausgebildet und/oder programmiert ist, den durch die zumindest eine autonome Arbeitsmaschine (8, 9) einzuhaltenden Sicherheitsabstand (21) in Abhängigkeit vom Vorhandensein statisch und/oder dynamisch arbeitender Arbeitsorgane an zumindest einem an die autonome Arbeitsmaschine (8, 9) adaptierten Anbaugerät (10) zu variieren.

12. Verfahren zur Generierung von virtuellen Feldgrenzen (3) für ein zu bearbeitendes landwirtschaftliches Territorium (2) durch ein auf elektronischem Datenaustausch basierenden Assistenzsystem (1), durch welches für zumindest eine autonome landwirtschaftliche Arbeitsmaschine (8, 9) ein Geofence-Datensatz (14) bereitgestellt wird, welcher zumindest Feldgrenz-Daten bezüglich der virtuellen Feldgrenzen (3) des Territoriums (2) umfasst, **dadurch gekennzeichnet, dass** die Feldgrenz-Daten in Abhängigkeit von der durch die zumindest eine autonome Arbeitsmaschine (8, 9) auszuführenden landwirtschaftlichen Arbeitsaufgabe durch das Assistenzsystem (1) angepasst werden, wobei die Anpassung zumindest das Generieren von durch die zumindest eine autonome Arbeitsmaschine (8, 9) einzuhaltenden Sicherheitsabständen (21) zu den virtuellen Feldgrenzen (3) umfasst.

13. Verfahren nach Anspruch 12, **dadurch gekennzeichnet, dass** die Anpassung von durch die zumindest eine autonome Arbeitsmaschine (8, 9) einzuhaltenden Sicherheitsabständen (21) zu einer der virtuellen Feldgrenzen (3) unter Berücksichtigung der Charakteristik eines an die jeweilige virtuelle Feldgrenze (3) angrenzenden räumlichen Umfeldes durchgeführt werden.

14. Verfahren nach Anspruch 13, **dadurch gekennzeichnet, dass** beim Ausführen von Arbeitssequenzen durch die zumindest einen autonomen Arbeitsmaschine (8, 9) der einzuhaltende Sicherheitsabstand (21) in Abhängigkeit von der auszuführenden landwirtschaftlichen Arbeitsaufgabe und unter Berücksichtigung der Charakteristik des räumlichen Umfeldes bestimmt wird.

15. Verfahren nach eine der Ansprüche 12 bis 14, **dadurch gekennzeichnet, dass** die Feldgrenz-Daten in Abhängigkeit von dem an die zumindest eine autonome Arbeitsmaschine (8, 9) adaptierten, zur Ausführung der landwirtschaftlichen Arbeitsaufgabe eingerichteten Anbaugerät (10) durch das Assistenzsystem (1) angepasst werden.
